# EUROPÄISCHE PATENTSCHRIFT

(11) **EP 2 036 467 B1**
(45) Veröffentlichungstag und Bekanntmachung des Hinweises auf die Patenterteilung: **01.09.2010**
(21) Anmeldenummer: 08012641.0
(22) Anmeldetag: 12.07.2008
(51) Int. Cl.: A47J 31/36

(54) **Perkolator zur Zubereitung von Brühgetränken**
Percolator for preparing hot drinks
Percolateur destiné à la préparation de boissons chaudes

(30) Priorität: 13.09.2007 DE 102007043712
(43) Veröffentlichungstag der Anmeldung: 18.03.2009
(73) Patentinhaber: Severin Elektrogeräte GmbH, 59846 Sundern (DE)
(72) Erfinder: Holz, Bernd, 59579 Arnsberg (DE)
(74) Vertreter: Köchling, Conrad-Joachim

(56) Entgegenhaltungen:
- EP-A- 0 468 915
- GB-A- 2 167 943
- US-A- 3 573 860

## Beschreibung

Die Erfindung betrifft einen Perkolator zur Zubereitung von Brühgetränken, Kaffee, Espresso oder dergleichen mit einem Gestell, einer am Gestell angeordneten Befüllstation zum Zuführen von gemahlenem Filtergut, einer am Gestell angeordneten Brühstation und einer am Gestell angeordneten Auswurfstation für den Trester, wobei die Befüllstation, die Brühstation und die Auswurfstation linear nebeneinander angeordnet sind, dass eine Brühkammer vorgesehen ist, die linear verstellbar am Gestell angeordnet ist, so dass sie alternativ an der Befüllstation, an der Brühstation oder an der Auswurfstation positioniert ist und in der Position der Befüllstation mit gemahlenem Filtergut beladen wird, nachfolgend in der Position der Brühstation das Filtergut verdichtet und mit heißem Wasser durchströmt wird, und schließlich in der Position der Auswurfstation der Trester ausgeworfen wird.

Ein derartiger Perkolator ist beispielsweise aus der GB-A-2 167 943 bekannt.

Solche Geräte werden zur Zubereitung von Brühgetränken benutzt. Diese Perkolatoren sind in beispielsweise einen Kaffeezubereitungsautomaten integriert, der eine Einrichtung zur Heißwasserzubereitung, eine Einrichtung zur Zuführung von Heißwasser über Druck in die Brühkammer und eine Einrichtung zur Abgabe des zubereiteten Getränkes in Form von Filtrat an ein Behältnis umfasst.

Die im Stand der Technik bekannten Perkolatoren sind teils in ihrem Aufbau sehr kompliziert, da beispielsweise eine Brühkammer vorgesehen ist, die rohrförmig ausgebildet ist und in einem rohrförmigen Zylinder längs verschieblich gelagert ist. Dabei wird seitlich in einer entsprechenden Verschiebeposition Kaffeemehl oder dergleichen zugeführt. Anschließend wird das die Brühkammer bildende Rohr verschoben und es werden Kolben oder dergleichen innerhalb des Rohres verschoben, um das Kaffeemehl zu pressen. Anschließend wird dann das Wasser unter einem Druck von beispielsweise bis zu 15 bar durch das zusammengepresste Kaffeemehl geleitet und das Filtrat abgeführt, beispielsweise in eine Tasse abgegeben. Nachfolgend muss dann durch entsprechende Bewegungsabläufe der Filterkuchen (Trester) ausgeworfen werden. Solche konstruktiven Lösungen sind relativ kompliziert und störungsanfällig. Es sind auch Perkolatoren bekannt, bei denen die Füllstation, die Brühstation und die Auswurfstation um eine Mittelachse drehbar angeordnet sind, so dass die einzelnen gewünschten Positionen durch Drehung von Bestandteilen zueinander einstellbar sind. Eine solche Ausbildung ist wegen des erforderlichen Platzbedarfes häufig nicht gut einsetzbar. Zudem sind die Steuerungen der Bewegungen relativ kompliziert.

Ausgehend von diesem Stand der Technik liegt der Erfindung die Aufgabe zugrunde, einen Perkolator gattungsgemäßer Art zu schaffen, der einfach aufgebaut ist, gegen Störungen unempfindlich ist und äußerst betriebssicher ist, wobei eine Bereicherung des Standes der Technik erreicht werden soll.

Zur Lösung dieser Aufgabe schlägt die Erfindung vor, dass am Gestell eine Auflagerplatte angeordnet ist, die sich horizontal erstreckt und die Linearführungsmittel aufweist, an denen eine Trägerplatte linear verschieblich geführt ist, von welcher oberseitig die Brühkammer in Form eines zylindrischen Rohrabschnittes abragt und die im Bereich der Brühkammer eine Durchgangslochung aufweist, wobei die Unterseite der Trägerplatte auf der Auflagerplatte aufliegt, wobei ferner die Auflagerplatte im Bereich der Brühstation und im Bereich der Aufwurfstation ebenfalls Durchgangslochungen aufweist.

Die Auflagerplatte ist Bestandteil eines Gestells oder an einem Gestell befestigt und erstreckt sich im Wesentlichen horizontal. An dieser Auflagerplatte können Linearführungsmittel vorgesehen sein, an denen die Trägerplatte linear verschieblich geführt ist. Von der Trägerplatte wiederum ragt oberseitig, also auf der der Auflagerplatte abgewandten Seite die Brühkammer in Form eines zylindrischen Rohrabschnittes ab. Im Bereich der Brühkammer, also im Anschlussbereich des Rohrabschnittes, weist die Trägerplatte die Durchgangslochung auf, deren Querschnitt in etwa dem Querschnitt des Rohrabschnittes entspricht. Die Unterseite der Trägerplatte liegt auf der Oberseite der Auflagerplatte auf. Im Bereich der Brühstation und im Bereich der Auswurfstation weist die Auflagerplatte Durchgangslochungen auf, die wieder im Querschnitt dem Querschnitt des zylindrischen Rohrabschnittes angepasst sind. Im Bereich der Füllstation weist die Auflagerplatte keine Lochung auf, um das Durchrieseln von gemahlenem Filtergut zu verhindern.

Hierbei besteht die Besonderheit, dass die unterschiedlichen Stationen des Perkolators linear nebeneinander angeordnet sind, was eine einfache Installation und Anordnung ermöglicht. Die linear verstellbare Brühkammer wird in die entsprechenden Positionen linear verschoben, so dass sie in einer ersten Position im Bereich der Befüllstation angeordnet ist. Hier erfolgt dann die Befüllung mit gemahlenem Filtergut, beispielsweise Kaffeemehl. Nach der Befüllung wird die Brühkammer in eine andere Position verschoben, in der das Filtergut zusammengepresst wird und durch Zuführung von Heißwasser unter hohem Druck ein entsprechendes

Getränk erzeugt wird. Nach Abschluss des Brühvorganges wird dann die Brühkammer in die Auswurfstation verschoben, in welcher das feuchte Filtergut (der Trester) ausgeworfen werden kann. Aufgrund der linearen Anordnung der Bestandteile nebeneinander ist die Positionierung der Befüllstation, Brühstation und Auswurfstation beliebig, so dass beispielsweise die Befüllstation in der Mitte zwischen der Brühstation und der Auswurfstation angeordnet sein kann, oder aber die Befüllstation kann beispielsweise an einem Ende des Bewegungspfades angeordnet sein, in Richtung des Bewegungspfades dann folgend die Brühstation und dann folgend die Auswurfstation. Je nach Anordnung einer entsprechenden Mahlvorrichtung, mit der das Filtergut gemahlen wird und die integraler Bestandteil der gesamten Kaffeemaschine ist, kann die Anordnung so getroffen werden, dass eine günstige Platzierung für die Kaffeemühle oder dergleichen ermöglicht ist. Aufgrund der linearen Anordnung der Bestandteile und der lediglich linearen Verstellmöglichkeit der Brühkammer ist der Bewegungsablauf einfach durchzuführen und mit einfachen Mitteln zu realisieren, wobei eine genaue Positionierung und ein störungsfreier Betrieb über eine lange Zeitdauer ermöglicht ist.

Um die entsprechende Linearverschiebung der Trägerplatte relativ zur Auflagerplatte zu realisieren, ist vorgesehen, dass die Trägerplatte und/oder die Brühkammer eine Zahnstange hält, die parallel zum linearen Stellweg gerichtet ist, und dass am Gestell ein mit der Zahnstange in Eingriff stehendes Ritzel gelagert ist, das über einen elektrischen Antriebsmotor angetrieben ist.

Durch die Betätigung des Antriebsmotors kann über das Ritzel und die Zahnstange die Trägerplatte entlang des möglichen Verfahrweges auf der Auflagerplatte verschoben werden, so dass die Brühkammer zunächst im Bereich der Befüllstation positioniert wird, in der gemahlenes Filtergut in die Brühkammer eingefüllt wird. Durch die unter der Lochung der Trägerplatte befindliche Auflagerplatte wird ein Durchrieseln des gemahlenen Filterguts verhindert. Nachfolgend kann dann die Trägerplatte mittels des Antriebes linear verschoben werden, so dass die Brühkammer im Bereich der Brühstation angeordnet ist. Durch entsprechende Stellglieder kann dann das gemahlene Filtergut verdichtet werden und in der verdichteten Position mit unter hohem Druck stehenden Heißwasser durchbrüht werden. Nach Abschluss des Brühvorganges und Abgabe des Filtrates an ein entsprechendes Behältnis kann dann die Trägerplatte entlang des Verfahrweges auf der Auflagerplatte in die Auswurfstation verfahren werden, in welcher der in der Brühkammer gebildete Trester ausgeworfen werden kann. Um die Verdichtung durch Brühung im Bereich der Brühstation zu erreichen und um das Auswerfen des Tresters in der Auswurfstation zu ermöglichen, ist in diesen Bereichen die Auflagerplatte entsprechend gelocht.

Bevorzugt ist dabei vorgesehen, dass am Gestell, insbesondere an der Auflagerplatte, Wegbegrenzungsanschläge und/oder Positionserfassungsschalter vorgesehen sind, mittels derer die Endstellungen und die Zwischenstellung der Brühkammer erfassbar sind und der Linearantrieb schaltbar ist.

Durch diese Ausbildung ist eine exakte Verstellung der Brühkammer ermöglicht, so dass auch ein verschleißarmer Betrieb der entsprechenden Organe, die im Bereich der Befüllstation und im Bereich der Auswurfstation zur Verdichtung bzw. zum Auswerfen erforderlich sind, ermöglicht ist. Durch Positionierung von Endschaltern oder dergleichen ist es möglich, die Positionierung in den entsprechenden Stationen abzufragen und die Betätigung der entsprechenden Elemente zur Verdichtung bzw. zum Auswerfen nur dann freizugeben, wenn die exakte Position eingestellt ist.

Zudem ist vorgesehen, dass die Auflagerplatte federnd gelagert ist und sich federnd nachgiebig an der Trägerplatte abstützt.

Durch diese Anordnung ist ein ausreichendes Bewegungsspiel zwischen Auflagerplatte und Trägerplatte ermöglicht.

Um einen verschleißarmen Betrieb zu ermöglichen ist zudem vorgesehen, dass die Auflagerplatte aus verschleißarmem Kunststoff besteht oder zumindest mit solchem Werkstoff auf der Anlageseite der Trägerplatte beschichtet ist.

Zudem kann vorgesehen sein, dass am Gestell im Bereich der Befüllstation oberhalb der Brühkammer ein Befülltrichter vorgesehen ist.

Des Weiteren ist vorgesehen, dass im Bereich der Brühstation mindestens ein Presskolben angeordnet ist, der in die Brühkammer verfahrbar ist.

Vorzugsweise ist vorgesehen, dass im Bereich der Brühstation zwei Presskolben angeordnet sind, deren erster oberhalb des Bewegungspfades der Brühkammer und deren zweiter unterhalb des Bewegungspfades der Brühkammer angeordnet ist, wobei beide Kolben koaxial zueinander ausgerichtet sind und mittels eines Antriebes axial verstellbar sind, wobei sie in einer Nichtgebrauchslage außerhalb der Bewegungsebene der Brühkammer angeordnet sind und in einer Gebrauchslage in die Brühkammer eingetaucht sind.

Des Weiteren ist vorzugsweise vorgesehen, dass der Antrieb für die Kolbenbewegung durch eine Gewindespindel gebildet ist, die parallel zum Stellweg der Kolben ausgerichtet ist und durch einen elektrischen Motor drehbar ist, dass an den Kolben außenseitig Spindelmuttern fixiert sind, die mit der Gewindespindel in Eingriff sind, wobei die Gewindespindel zwei gegenläufige Gewindeabschnitte aufweist, deren einer mit der Spindelmutter des oberen Kolbens und deren anderer mit der Spindelmutter des unteren Kolbens in Eingriff ist, so dass durch Spindeldrehung die Kolben gegenläufig bewegbar sind.

Bei der Steuerung der Kolbenbewegung kann dabei vorgesehen sein, dass nach dem Brühvorgang die Kolben nochmals aufeinander zu bewegt werden, um das durchnässte Filtrat weitgehend zu trocknen, damit beim anschließenden Auspressen des Tresters in der Auswurfstation ein möglichst trockener Trester ausgeworfen werden kann.

Zudem ist vorgesehen, dass im Bereich der Aufwurfstation ein Auswurfkolben vorgesehen ist, der in die Brühkammer verfahrbar ist.

Dabei ist vorgesehen, dass der Auswurfkolben mit einem Antrieb axial verstellbar ist, wobei er in einer Nichtgebrauchslage oberhalb der Bewegungsebene der Brühkammer angeordnet ist und in einer Gebrauchslage in die Brühkammer eingetaucht ist.

Auch hierbei kann vorgesehen sein, dass der Auswurfkolben durch eine Gewindespindel verstellbar ist, die parallel zum Stellweg des Kolbens ausgerichtet ist und durch einen elektrischen Antriebsmotor drehbar ist, und dass am Auswurfkolben außenseitig eine Spindelmutter fixiert ist, die mit der Gewindespindel in Eingriff ist.

Besonders bevorzugt ist vorgesehen, dass für die Drehung der Gewindespindeln der Presskolben und des Auswurfkolbens ein gemeinsamer elektrischer Antriebsmotor vorgesehen ist, der über Getriebeelemente, insbesondere Zahnräder, mit den Gewindespindeln in Eingriff ist.

Die Anzahl der erforderlichen Bauteile wird damit minimiert. Die Ausbildung kann dabei so vorgenommen sein, dass die Gewindespindel des Auswurfkolbens die doppelte Steigung aufweist, wie die Gewindespindel der Presskolben, so dass bei Betätigung des Antriebes der Auswurfkolben gegenüber einem Presskolben den doppelten Weg zurücklegt.

Zudem kann vorgesehen sein, dass im Bereich der Auswurfstation unterhalb der Auswurfstelle des Tresters ein Aufnahmebehältnis, vorzugsweise eine Schublade, angeordnet ist.

Auch kann vorgesehen sein, dass die Anschlussteile für die Heißwasserzufuhr und die Ableitung des Filtrates an den Presskolben angeordnet sind.

Bevorzugt ist zudem vorgesehen, dass an der Brühkammer, insbesondere nahe deren oberen Endbereich eine Auflageplatte befestigt ist, die die Mündung der Brühkammer freilässt und bei Positionierung der Brühkammer im Bereich der Brühstation und/oder im Bereich der Aufwurfstation die Mündung der Befüllstation überdeckt.

Hiermit wird erreicht, dass dann, wenn sich die Brühkammer in der Brühstation oder in der Auswurfstation befindet, ein Nachrieseln von gemahlenem Filtergut unterbunden ist. Insbesondere dann, wenn sich die Brühkammer im Bereich der Auswurfstation befindet, kann im Bereich der Befüllstation schon Kaffeemehl eingefüllt werden, welches dann nach dem Auswerfen des Tresters und nach Bewegung der Brühkammer in die Füllstation in die Brühkammer abgeworfen werden kann.

Eine wesentliche Besonderheit wird noch darin gesehen, dass der Rohrabschnitt, der die Brühkammer bildet, an seinen Mündungsbereichen konisch erweitert ist, so dass die lichte Weite gering größer als der Außendurchmesser des Auswurfkolbens und der Presskolben gegebenenfalls einschließlich der die Kolben umgebenden Dichtungen ist, während er im Mittelabschnitt zylindrisch ist und dem Kolbenmaß gegebenenfalls samt Dichtungen eng angepasst ist.

Hierdurch wird erreicht, dass beim Einfahren der Kolben in den Rohrabschnitt die Dichtungen nicht auf Verschleiß beansprucht sind, da sie zunächst mit radialem Spiel in den Rohrabschnitt eingreifen können, bevor sie dann im zylindrischen Mittelbereich dicht am Innenmantel des Rohrabschnittes anliegen. Die Kolben weisen üblicherweise Dichtungen auf, die in Form von O-Ringen ausgebildet sind und das freie Ende der Kolben außen umgeben. Hieraus resultiert auch der Vorteil, dass nicht über den gesamten Stellweg der Kolben der maximale Andruck auf die Dichtungen ausgeübt wird. Der Verschleiß der Dichtungen wird damit erheblich verringert.

Zusätzlich kann vorgesehen sein, dass die Brühkammer aus Edelstahl besteht.

Die entsprechende Ausbildung der Brühkammer hat den Vorteil, dass das ausgewählte Material geschmacksneutral und verschleißarm ist.

Zusätzlich kann vorgesehen sein, dass der Auswurfkolben eine umlaufende elastische Lippe, insbesondere aus Silikon, aufweist.

Es wird hierdurch bei Betätigung des Auswurfkolbens erreicht, dass die Brühkammer von anhaftenden Filtergutresten befreit und gereinigt wird.

Ein schematisches Ausführungsbeispiel der Erfindung ist in der Zeichnung dargestellt und im Folgenden näher beschrieben.

Es zeigt:
- Figur 1: die wesentlichen Bestandteile eines Perkolators in Ansicht;
- Figur 2: eine Schnittansicht der Figur 1 in der Befüllsituation;
- Figur 3: desgleichen in der Brühposition vor der Verdichtung des Materials;
- Figur 4: desgleichen nach der Verdichtung des Filterguts;
- Figur 5: desgleichen in der Arbeitsstellung der Auswurfposition;
- Figur 6: die Situation bei vollendetem Auswurf des Tresters;
- Figur 7: eine Einzelheit in vergrößerter Ansicht.

In der Zeichnung sind die wesentlichen Bestandteile eines Perkolators zur Zubereitung von Brühgetränken, Kaffee, Espresso oder dergleichen gezeigt. Der Perkolator weist ein Gestell 1 auf. An diesem Gestell ist im Bereich 2 eine Befüllstation zum Zuführen von gemahlenem Filtergut vorgesehen. Im Bereich 3 ist am Gestell 1 eine Brühstation 3 angeordnet und im Bereich 4 ist am Gestell eine Auswurfstation 4 für den Trester vorgesehen.

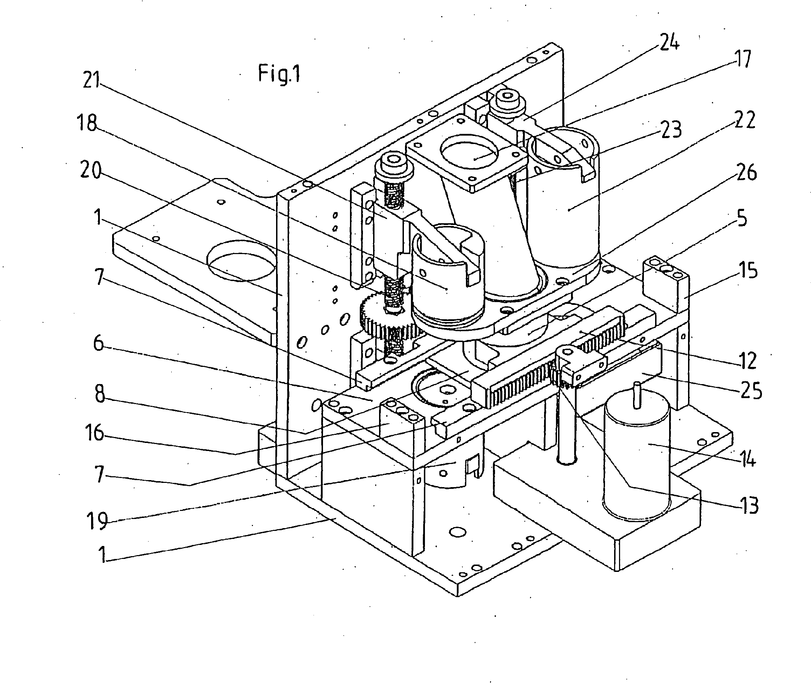

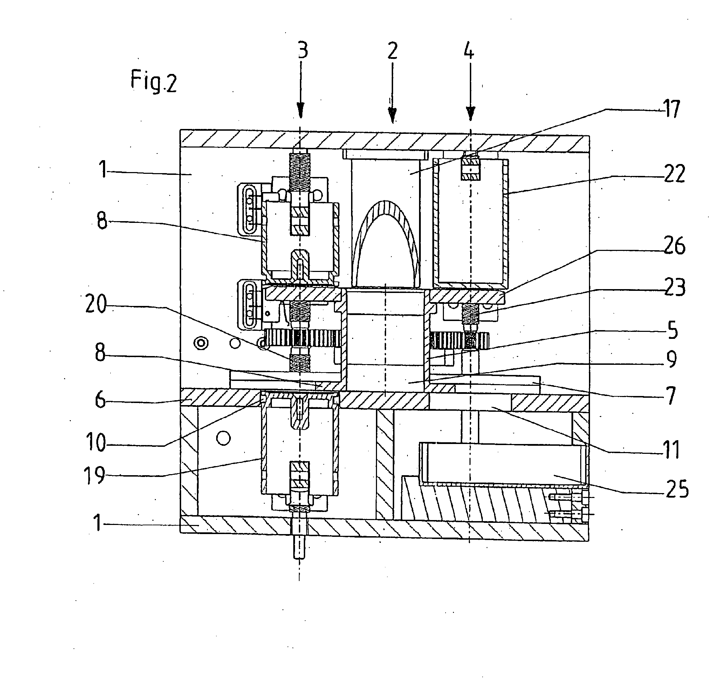

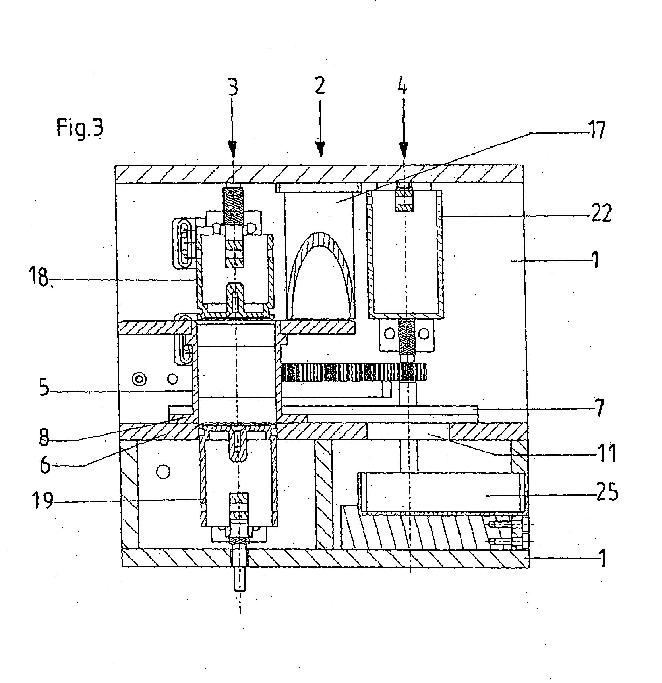

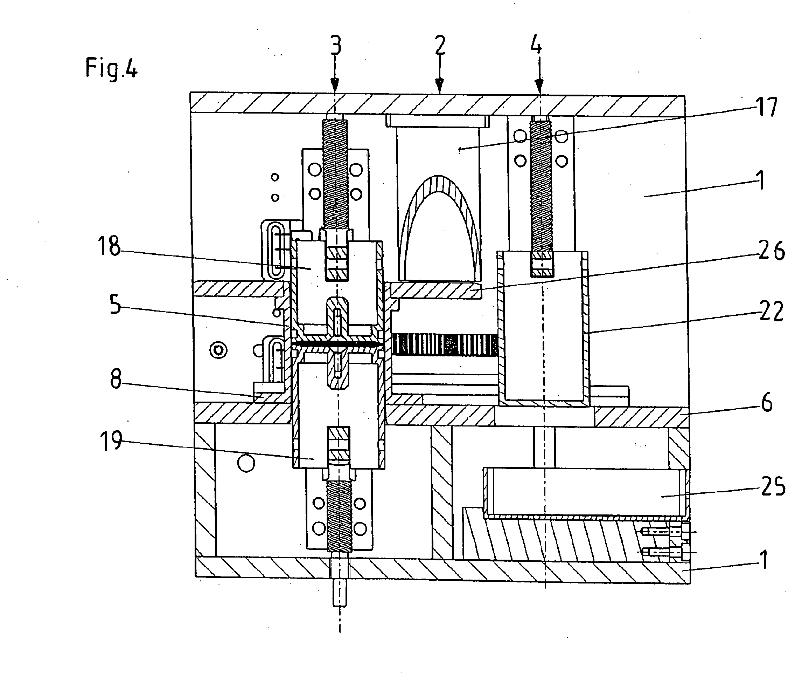

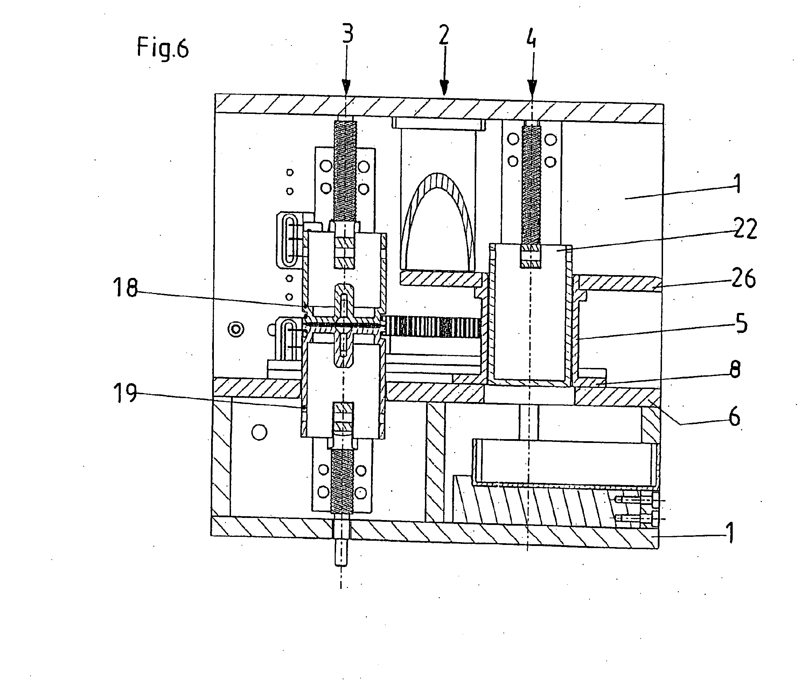

Wie beispielsweise aus der Darstellung gemäß Figur 1 ersichtlich, sind die Füllstation 2, die Brühstation 3 und die Auswurfstation 4 linear nebeneinander angeordnet. Des Weiteren ist eine Brühkammer 5 vorgesehen, die durch geeignete Mittel linear verstellbar am Gestell 1 angeordnet ist. Somit ist es möglich, die Brühkammer 5 alternativ an der Befüllstation 2, an der Brühstation 3 oder an der Auswurfstation 4 zu positionieren. Sofern sich die Brühkammer 5 im Bereich der Befüllstation befindet, wie in Figur 1 und 2 gezeigt ist, kann sie mit gemahlenem Filtergut beladen werden. Nachfolgend erfolgt die Verschiebung der Brühkammer 5 in die Position der Brühstation 3, wie in Figur 3 und 4 gezeigt. Hierbei kann das Filtergut verdichtet werden und anschließend mit unter hohem Druck stehendem heißem Wasser durchströmt werden. Vorzugsweise erfolgt die Durchströmung von unten nach oben, wobei entsprechende Ein- und Auslässe an den Stellorganen vorgesehen sind, die später noch beschrieben werden. Nach Durchführung des Brühvorganges wird die Brühkammer 5 dann in die Position der Auswurfstation 4 verstellt, wie in Figur 4 und 6 gezeigt ist. In dieser Position kann der entsprechende Trester ausgeworfen werden. Im Ausführungsbeispiel ist am Gestell 1 eine Auflagerplatte 6 befestigt, die sich horizontal erstreckt und die Linear-Führungsmittel 7 aufweist, an denen eine Trägerplatte 8 linear verschieblich geführt ist, von der oberseitig die Brühkammer 5 in Form eines beidends offenen zylindrischen Rohrabschnittes abragt. Die Trägerplatte weist im Bereich der Brühkammer 5 eine Durchgangslochung 9 auf. Die Unterseite der Trägerplatte 8 liegt auf der Auflagerplatte 6 an. Ferner weist die Auflagerplatte 6 im Bereich der Brühstation 3 und im Bereich der Auswurfstation 4 Durchgangslochungen 10,11 auf. Im Bereich der Befüllstation 2 ist die Auflagerplatte 6 nicht gelocht, sondern bildet eine geschlossene Fläche.

Wie insbesondere aus Figur 1 ersichtlich, ist an der Brühkammer 5 bzw. der Trägerplatte 8 eine Zahnstange 12 befestigt, die parallel zum linearen Stellweg ausgerichtet ist. Am Gestell 1 ist ein mit der Zahnstange 12 in Eingriff stehendes Ritzel 13 gelagert, das über einen elektrischen Antriebsmotor 14 und im Einzelnen nicht näher dargestellte Getriebemittel angetrieben wird. Hierdurch erfolgt die Verstellung der Brühkammer 5 in die einzelnen Positionen.

Am Gestell 1, insbesondere an der Auflagerplatte 6, sind Wegbegrenzungsanschläge 15,16 und/oder Positionserfassungsschalter vorgesehen, mittels derer die Endstellungen und auch die Zwischenstellung der Brühkammer 5 erfassbar ist und mittels derer der Linearantrieb schaltbar ist.

Die Auflagerplatte 6 kann zusätzlich federnd gelagert sein und sich federnd nachgiebig an der Trägerplatte 8 abstützen. Zudem besteht die Auflagerplatte 6 vorzugsweise aus verschleißarmem Kunststoff.

Am Gestell 1 ist im Bereich der Befüllstation 2 oberhalb der Brühkammer 5 ein Befülltrichter 17 vorgesehen, an dessen Mündung ein elektrisches Mahlwerk angeschlossen sein kann.

Im Bereich der Brühstation 3 sind zwei Presskolben 18,19 angeordnet, deren erster (18) oberhalb des Bewegungspfades der Brühkammer 5 und deren zweiter (19) unterhalb des Bewegungspfades der Brühkammer 5 angeordnet ist. Die beiden Kolben 18,19 sind koaxial zueinander ausgerichtet und mittels eines Antriebes axial verstellbar, wobei sie in einer Nichtgebrauchslage, wie beispielsweise in Figur 2 und 3 gezeigt ist, außerhalb der Bewegungsebene der Brühkammer 5 angeordnet sind und in der Gebrauchslage, die in Figur 4 gezeigt ist, in die Brühkammer 5 eingetaucht sind.

Der Antrieb für die Kolbenbewegung wird durch eine Gewindespindel 20 gebildet, die parallel zum Stellweg der Kolben 18,19 ausgerichtet ist und durch einen elektrischen Motor drehbar ist. An den Kolben 18,19 sind außenseitig Spindelmuttern 21 fixiert und linear geführt, die mit der Gewindespindel 20 in Eingriff sind. Dabei weist die Gewindespindel 20 zwei gegenläufige Gewindeabschnitte auf, deren einer mit der Spindelmutter des oberen Kolbens 18 und deren anderer mit der Spindelmutter des unteren Kolbens 19 in Eingriff ist, so dass durch die Drehung der Gewindespindel 20 die Kolben gegenläufig bewegbar sind.

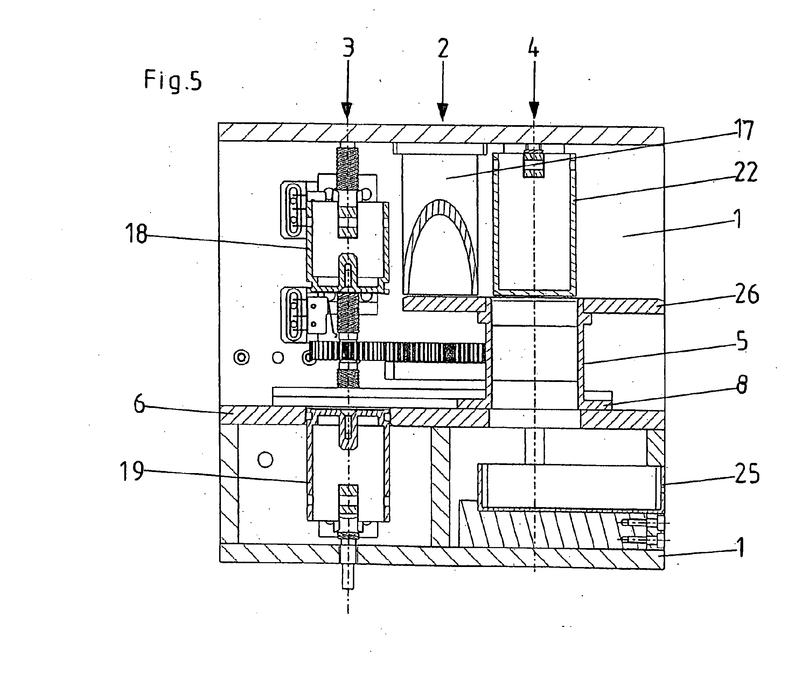

Im Bereich der Auswurfstation 4 ist ein Auswurfkolben 22 vorgesehen, der in die Brühkammer 5 verfahrbar ist, wie in Figur 5 und 6 verdeutlicht ist. Hierzu ist eine Gewindespindel 23 vorgesehen, die ebenfalls parallel zum Stellweg des Kolbens 22 ausgerichtet ist und durch einen elektrischen Antriebsmotor drehbar ist, wobei am Auswurfkolben 22 außenseitig eine Spindelmutter 24 fixiert ist, die parallel zum Stellweg geführt ist und mit der Gewindespindel 23 in Eingriff ist. Diese Gewindespindel 23 weist die doppelte Steigung wie die Gewindespindel 20 auf, damit bei Drehung der Gewindespindeln durch das gleiche Stellorgan der doppelte Stellweg erreicht wird.

Im Bereich der Auswurfstation 4 ist unterhalb der Auswurfstelle des Tresters ein Aufnahmebehältnis 25, beispielsweise in Form einer Schublade, vorgesehen. Die Anschlussteile für die Heißwasserzufuhr und die Ableitung des Filtrates sind an Presskolben 18,19 vorgesehen.

Zusätzlich ist an der Brühkammer 5 nahe deren oberem Endbereich eine Auflageplatte 26 befestigt, die die Mündung der Brühkammer 5 freilässt und bei Positionierung der Brühkammer 5 im Bereich der Brühstation 3 und/oder im Bereich der Auswurfstation 4 die Mündung der Befüllstation 2 überdeckt. Insbesondere beim Auswerfen des Tresters in der Auswurfstation 4 kann dann schon in der Befüllstation 2 gemahlenes Filtergut zugeführt werden, welches nicht nach unten fallen kann, da dieser Weg durch die Platte 26 versperrt ist. Erst wenn die Brühkammer 5 in die Position der Befüllstation 2 überführt wird, kann das gemahlene Filtergut in die Brühkammer 5 abgeworfen werden.

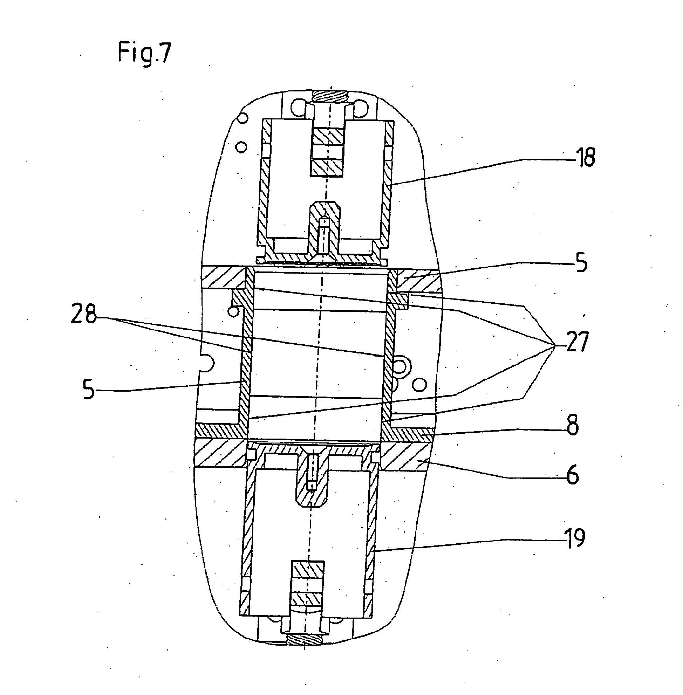

Der Rohrabschnitt, der die Brühkammer 5 bildet, ist, wie insbesondere in Figur 7 veranschaulicht, an seinen Mündungsbereichen konisch erweitert (konische Erweiterung 27), so dass die lichte Weite gering größer als der Außendurchmesser des Auswurfkolbens 22 und der Presskolben 18,19 ist (einschließlich der die Kolben umgebenden Dichtungen), und er im Mittelabschnitt 28 zylindrisch ausgebildet ist und im Kolbenmaß samt Dichtungen eng angepasst ist.

Vorzugsweise besteht die Brühkammer 5 aus Edelstahl.

Der Auswurfkolben 22 weist vorzugsweise an seinem freien Ende eine außen umlaufende elastische Lippe aus Silikon auf, so dass die Brühkammer 5 beim Eintauchen des Auswurfkolbens von anhaftenden Rosten befreit wird.

Die Funktion des Perkolators ist anhand der Zeichnungsfiguren gut erläuterbar. In der Ausgangsstellung befindet sich die Brühkammer unterhalb des Befüllstutzens der Befüllstation 2, wie in Figur 2 gezeigt. In dieser Position wird gemahlenes Filtergut in die Brühkammer eingefüllt. Anschließend wird die Brühkammer 5 linear zur Brühstation 3 hin verschoben, wie in Figur 3 gezeigt ist. In dieser Position wird der Antrieb der Kolben betätigt, so dass die Kolben in die Verdichtungsposition überführt werden, wie in Figur 4 gezeigt ist. Nachfolgend erfolgt die Durchbrühung des zusammengepressten Kaffeemehls oder dergleichen. Nach Beendigung des Brühvorganges werden die Kolben zurückgestellt und die Brühkammer 5 wird in die Position bewegt, die in Figur 5 gezeigt ist. Es wird dann der Auswurfkolben betätigt und in die Stellung gemäß Figur 6 verfahren, wobei der Trester dann nach unten abgeworfen wird.

Der erfindungsgemäße Perkolator ist einfach aufgebaut und funktionssicher über lange Zeitdauer zu betreiben.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Perkolator zur Zubereitung von Brühgetränken, Kaffee, Espresso oder dergleichen mit einem Gestell (1), einer am Gestell angeordneten Befüllstation (2) zum Zuführen von gemahlenem Filtergut, einer am Gestell (1) angeordneten Brühstation (3) und einer am Gestell (1) angeordneten Auswurfstation (4) für den Trester, wobei die Befüllstation (2), die Brühstation (3) und die Auswurfstation (4) linear nebeneinander angeordnet sind, dass eine Brühkammer (5) vorgesehen ist, die linear verstellbar am Gestell (1) angeordnet ist, so dass sie alternativ an der Befüllstation (2), an der Brühstation (3) oder an der Auswurfstation (4) positioniert ist und in der Position der Befüllstation (2) mit gemahlenem Filtergut beladen wird, nachfolgend in der Position der Brühstation (3) das Filtergut verdichtet und mit heißem Wasser durchströmt wird, und schließlich in der Position der Auswurfstation (4) der Trester ausgeworfen wird, **dadurch gekennzeichnet, dass** am Gestell (1) eine Auflagerplatte (6) angeordnet ist, die sich horizontal erstreckt und die Linearführungsmittel (7) aufweist, an denen eine Trägerplatte (8) linear verschieblich geführt ist, von welcher oberseitig die Brühkammer (5) in Form eines zylindrischen Rohrabschnittes abragt und die im Bereich der Brühkammer (5) eine Durchgangslochung (9) aufweist, wobei die Unterseite der Trägerplatte (8) auf der Auflagerplatte (6) aufliegt, wobei ferner die Auflagerplatte (6) im Bereich der Brühstation (3) und im Bereich der Aufwurfstation (4) ebenfalls Durchgangslochungen (10,11) aufweist.

2. Perkolator nach Anspruch 1,
**dadurch gekennzeichnet, dass** die Trägerplatte (6) und/oder die Brühkammer (5) eine Zahnstange (12) hält, die parallel zum linearen Stellweg gerichtet ist, und dass am Gestell (1) ein mit der Zahnstange (12) in Eingriff stehendes Ritzel (13) gelagert ist, das über einen elektrischen Antriebsmotor (14) angetrieben ist.

3. Perkolator nach einem der Ansprüche 1 oder 2,
**dadurch gekennzeichnet, dass** am Gestell (1), insbesondere an der Auflageplatte (6), Wegbegrenzungsanschläge (15,16) und/oder Positionserfassungsschalter vorgesehen sind, mittels derer die Endstellungen und die Zwischenstellung der Brühkammer (5) erfassbar sind und der Linearantrieb schaltbar ist.

4. Perkolator nach einem der Ansprüche 2 oder 3,
**dadurch gekennzeichnet, dass** die Auflagerplatte (8) federnd gelagert ist und sich federnd nachgiebig an der Trägerplatte (6) abstützt.

5. Perkolator nach einem der Ansprüche 2 bis 4,
**dadurch gekennzeichnet, dass** die Auflagerplatte (8) aus verschleißarmem Kunststoff besteht oder zumindest mit solchem Werkstoff auf der Anlageseite der Trägerplatte (6) beschichtet ist.

6. Perkolator nach einem der Ansprüche 1 bis 5,
**dadurch gekennzeichnet, dass** am Gestell (1) im Bereich der Befüllstation (2) oberhalb der Brühkammer (5) ein Befülltrichter (17) vorgesehen ist.

7. Perkolator nach einem der Ansprüche 1 bis 6,
**dadurch gekennzeichnet, dass** im Bereich der Brühstation (3) mindestens ein Presskolben angeordnet ist, der in die Brühkammer (5) verfahrbar ist.

8. Perkolator nach Anspruch 7,
**dadurch gekennzeichnet, dass** im Bereich der Brühstation (3) zwei Presskolben (18,19) angeordnet sind, deren erster oberhalb des Bewegungspfades der Brühkammer (5) und deren zweiter unterhalb des Bewegungspfades der Brühkammer (5) angeordnet ist, wobei beide Kolben (18,19) koaxial zueinander ausgerichtet sind und mittels eines Antriebes axial verstellbar sind, wobei sie in einer Nichtgebrauchslage außerhalb der Bewegungsebene der Brühkammer (5) angeordnet sind und in einer Gebrauchslage in die Brühkammer (5) eingetaucht sind.

9. Perkolator nach Anspruch 8,
**dadurch gekennzeichnet, dass** der Antrieb für die Kolbenbewegung durch eine Gewindespindel (20) gebildet ist, die parallel zum Stellweg der Kolben ausgerichtet ist und durch einen elektrischen Motor drehbar ist, dass an den Kolben außenseitig Spindelmuttern (21) fixiert sind, die mit der Gewindespindel (20) in Eingriff sind, wobei die Gewindespindel (20) zwei gegenläufige Gewindeabschnitte aufweist, deren einer mit der Spindelmutter des oberen Kolbens und deren anderer mit der Spindelmutter des unteren Kolbens in Eingriff ist, so dass durch Spindeldrehung die Kolben gegenläufig bewegbar sind.

10. Perkolator nach einem der Ansprüche 1 bis 9, **dadurch gekennzeichnet, dass** im Bereich der
Aufwurfstation (4) ein Auswurfkolben (22) vorgesehen ist, der in die Brühkammer (5) verfahrbar ist.

11. Perkolator nach Anspruch 10,
**dadurch gekennzeichnet, dass** der Auswurfkolben (22) mit einem Antrieb axial verstellbar ist, wobei er in einer Nichtgebrauchslage oberhalb der Bewegungsebene der Brühkammer (5)angeordnet ist und in einer Gebrauchslage in die Brühkammer (5) eingetaucht ist.

12. Perkolator nach Anpruch 10 oder 11,
**dadurch gekennzeichnet, dass** der Auswurfkolben (22) durch eine Gewindespindel (23) verstellbar ist, die parallel zum Stellweg des Kolbens ausgerichtet ist und durch einen elektrischen Antriebsmotor drehbar ist, und dass am Auswurfkolben (22) außenseitig eine Spindelmutter (24) fixiert ist, die mit der Gewindespindel (23) in Eingriff ist.

13. Perkolator nach einem der Ansprüche 8 bis 12,
**dadurch gekennzeichnet, dass** für die Drehung oder Gewindespindeln (20,23) der Presskolben (18,19) und des Auswurfkolbens (22) ein gemeinsamer elektrischer Antriebsmotor vorgesehen ist, der über Getriebeelemente, insbesondere Zahnräder, mit den Gewindespindeln in Eingriff ist.

14. Perkolator nach einem der Ansprüche 1 bis 13,
**dadurch gekennzeichnet, dass** im Bereich der Auswurfstation (4) unterhalb der Auswurfstelle des Tresters ein Aufnahmebehältnis (25), vorzugsweise eine Schublade, angeordnet ist.

15. Perkolator nach einem der Ansprüche 8 bis 14,
**dadurch gekennzeichnet, dass** die Anschlussteile für die Heißwasserzufuhr und die Ableitung des Filtrates an den Presskolben (18,19) angeordnet sind.

16. Perkolator nach einem der Ansprüche 1 bis 15,
**dadurch gekennzeichnet, dass** an der Brühkammer (5), insbesondere nahe deren oberen Endbereich, eine Auflageplatte (26) befestigt ist, die die Mündung der Brühkammer (5) freilässt und bei Positionierung der Brühkammer (5) im Bereich der Brühstation (3) und/oder im Bereich der Aufwurfstation (4) die Mündung der Befüllstation (2) überdeckt.

17. Perkolator nach einem der Ansprüche 1 bis 16,
**dadurch gekennzeichnet, dass** der Rohrabschnitt, der die Brühkammer (5) bildet, an seinen Mündungsbereichen (27) konisch erweitert ist, so dass die lichte Weite gering größer als der Außendurchmesser des Auswurfkolbens (22) und der Presskolben (18,19) gegebenenfalls einschließlich der die Kolben umgebenden Dichtungen ist, während er im Mittelabschnitt zylindrisch (28) ist und dem Kolbenmaß gegebenenfalls samt Dichtungen eng angepasst ist.

18. Perkolator nach einem der Ansprüche 1 bis 17,
**dadurch gekennzeichnet, dass** die Brühkammer (5) aus Edelstahl besteht.

19. Perkolator nach einem der Ansprüche 10 bis 18,
**dadurch gekennzeichnet, dass** der Auswurfkolben (22) eine umlaufende elastische Lippe, insbesondere aus Silikon, aufweist.

## Claims

1. A percolator for the preparation of hot drinks, coffee, espresso or the like with a stand (1), a filling station (2) arranged on the stand for supplying ground material for filtering, a brewing station (3) arranged on the stand (1) and an ejection station (4) arranged on the stand (1) for the grounds, wherein the filling station (2), the brewing station (3) and the ejection station (4) are arranged in a linear manner adjacent to one another, a brewing chamber (5) being provided which is arranged so as to be displaceable in a linear manner on the stand (1), so that it is positioned alternately on the filling station (2), on the brewing station (3) or on the ejection station (4), and in the position of the filling station (2) it is charged with ground material for filtering, then in the position of the brewing station (3) the material for filtering is compressed and has hot water pass through it, and finally in the position of the ejection station (4) the grounds are ejected, **characterised in that** the stand (1) has arranged thereon a support plate (6) which extends horizontally and which has linear guide means (7) on which a carrier plate (8) is guided so as to be displaceable in a linear manner, from the top of which carrier plate (8) the brewing chamber (5) projects in the form of a cylindrical tube portion and which carrier plate (8) has a continuous perforation (9) in the region of the brewing chamber (5), wherein the underside of the carrier plate (8) rests on the support plate (6), wherein furthermore the support plate (6) likewise has continuous perforations (10, 11) in the region of the brewing station (3) and in the region of the ejection station (4).

2. A percolator according to claim 1, **characterised in that** the support plate (6) and/or the brewing chamber (5) holds or hold a toothed rack (12) which is directed parallel to the linear displacement path, and a pinion (13), which engages with the toothed rack (12) and which is driven by way of an electric drive motor (14), is mounted on the stand (1).

3. A percolator according to one of claims 1 or 2, **characterised in that** displacement-limiting stops (15, 16) and/or position-detecting switches, by means of which the end positions and the intermediate position of the brewing chamber (5) are capable of being detected and the linear drive is capable of being switched, are provided on the stand (1), in particular on the support plate (6).

4. A percolator according to one of claims 2 or 3, **characterised in that** the support plate (8) is mounted in a resilient manner and is supported in a resiliently yielding manner on the carrier plate (6).

5. A percolator according to any one of claims 2 to 4, **characterised in that** the support plate (8) consists of wear-resistant plastics material or at least is coated with a material of this type on the abutment side of the carrier plate (6).

6. A percolator according to any one of claims 1 to 5, **characterised in that** a filling funnel (17) is provided on the stand (1) in the region of the filling station (2) above the brewing chamber (5).

7. A percolator according to any one of claims 1 to 6, **characterised in that** at least one pressing ram, which is movable into the brewing chamber (5), is arranged in the region of the brewing station (3).

8. A percolator according to claim 7, **characterised in that** two pressing rams (18, 19), the first of which is arranged above the movement path of the brewing chamber (5) and the second of which is arranged below the movement path of the brewing chamber (5), are arranged in the region of the brewing station (3), wherein the two rams (18, 19) are orientated coaxially with each other and are axially displaceable by means of a drive, wherein they are situated outside the movement plane of the brewing chamber (5) in an idle position and are immersed into the brewing chamber (5) in an operative position.

9. A percolator according to claim 8, **characterised in that** the drive for the movement of the rams is formed by a threaded spindle (20) which is orientated parallel to the displacement path of the rams and is rotatable by an electric motor, and spindle nuts (21), which engage with the threaded spindle (20), are fixed to the rams on the outside, wherein the threaded spindle (20) has two thread portions which run in opposite directions and one of which engages with the spindle nut of the upper ram and the other of which engages with the spindle nut of the lower ram, so that the rams are movable in opposite directions by rotation of the spindle.

10. A percolator according to any one of claims 1 to 9, **characterised in that** an ejector ram (22), which is displaceable into the brewing chamber (5), is provided in the region of the ejection station (4).

11. A percolator according to claim 10, **characterised in that** the ejector ram (22) is displaceable axially by a drive, wherein it is situated above the movement plane of the brewing chamber (5) in an idle position and is immersed into the brewing chamber (5) in an operative position.

12. A percolator according to claim 10 or 11, **characterised in that** the ejector ram (22) is displaceable by a threaded spindle (23) which is orientated parallel to the displacement path of the ram and is rotatable by an electric drive motor, and a spindle nut (24), which engages with the threaded spindle (23), is fixed to the ejector ram (22) on the outside.

13. A percolator according to any one of claims 8 to 12, **characterised in that** a common electric drive motor, which engages with the threaded spindles (20, 23) by way of gear elements, in particular toothed wheels, is provided for rotating the threaded spindles (20, 23) of the pressing rams (18, 19) and of the ejector ram (22) .

14. A percolator according to any one of claims 1 to 13, **characterised in that** a receiving container (25), preferably a drawer, is arranged in the region of the ejection station (4) below the ejection location of the grounds.

15. A percolator according to any one of claims 8 to 14, **characterised in that** the connection parts for the hot-water supply and the discharge line of the filtrate are arranged on the pressing rams (18, 19).

16. A percolator according to any one of claims 1 to 15, **characterised in that** a support plate (26), which frees the opening of the brewing chamber (5) and covers the opening of the filling station (2) when the brewing chamber (5) is positioned in the region of the brewing station (3) and/or in the region of the ejection station (4), is fastened to the brewing chamber (5), in particular in the vicinity of the upper end region thereof.

17. A percolator according to any one of claims 1 to 16, **characterised in that** the tube portion which forms the brewing chamber (5) is enlarged in a conical manner at its opening regions (27), so that the internal width is slightly larger than the external diameter of the ejector ram (22) and the pressing rams (18, 19) possibly including the seals surrounding the rams, whereas it is cylindrical (28) in the middle portion and it is closely adapted to the dimension of the rams, possibly including the seals.

18. A percolator according to any one of claims 1 to 17, **characterised in that** the brewing chamber (5) consists of special steel.

19. A percolator according to any one of claims 1 to 18, **characterised in that** the ejector ram (22) has a continuous resilient lip, in particular of silicone.

## Revendications

1. Percolateur destiné à la préparation de boissons chaudes, de café, d'expresso ou de substances similaires, comprenant un bâti (1), un poste d'emplissage (2) disposé sur ledit bâti et conçu pour délivrer un produit moulu à filtrer, un poste de percolation (3) disposé sur ledit bâti (1), et un poste (4) d'éjection du marc, disposé sur ledit bâti (1), ledit poste d'emplissage (2), ledit poste de percolation (3) et ledit poste d'éjection (4) étant agencés en juxtaposition linéaire, sachant qu'il est prévu une chambre de lixiviation (5) qui est montée à déplacement linéaire sur le bâti (1), de telle sorte qu'elle puisse être alternativement présentée au poste d'emplissage (2), au poste de percolation (3) ou au poste d'éjection (4) ; et qui, à l'emplacement dudit poste d'emplissage (2), est chargée en produit moulu à filtrer, compacte ensuite ledit produit à filtrer, à l'emplacement du poste de percolation (3), puis est traversée par de l'eau chaude, le marc étant, pour finir, expulsé à l'emplacement du poste d'éjection (4), **caractérisé par le fait qu'**une platine d'appui (6), placée sur le bâti (1), s'étend horizontalement et comporte des moyens (7) de guidage linéaire sur lesquels est guidée, à coulissement linéaire, une platine de support (8) au-delà de la face supérieure de laquelle la chambre de lixiviation (5) fait saillie sous la forme d'un tronçon tubulaire cylindrique, et qui est pourvue d'une perforation de passage (9) dans la région de ladite chambre de lixiviation (5), la face inférieure de ladite platine de support (8) reposant sur la platine d'appui (6), et ladite platine d'appui (6) étant, par ailleurs, semblablement munie de perforations de passage (10, 11) dans la région du poste de percolation (3) et dans la région du poste d'éjection (4).

2. Percolateur selon la revendication 1,
**caractérisé par le fait que** la platine de support (8), et/ou la chambre de lixiviation (5), procure(nt) une retenue à une crémaillère (12) orientée parallèlement à la course de mouvement linéaire ; et **par le fait qu'**un pignon (13), monté sur le bâti (1) et en prise avec ladite crémaillère (12), est entraîné par l'intermédiaire d'un moteur électrique d'entraînement (14).

3. Percolateur selon l'une des revendications 1 ou 2,
**caractérisé par** la présence sur le bâti (1), en particulier sur la platine d'appui (6), de butées (15, 16) de limitation de courses et/ou d'interrupteurs de détection de positions, au moyen desquel(le)s les positions extrêmes et la position intermédiaire de la chambre de lixiviation (5) peuvent être détectées, et l'entraînement linéaire peut être commuté.

4. Percolateur selon l'une des revendications 2 ou 3,
**caractérisé par le fait que** la platine d'appui (6) est montée élastiquement et prend appui, avec souplesse élastique, sur la platine de support (8).

5. Percolateur selon l'une des revendications 2 à 4,
**caractérisé par le fait que** la platine d'appui (6) est constituée d'une matière plastique à faible usure, ou est au moins revêtue d'un tel matériau sur la face de contact de la platine de support (8).

6. Percolateur selon l'une des revendications 1 à 5,
**caractérisé par le fait qu'**un entonnoir d'emplissage (17) est prévu sur le bâti (1) au-dessus de la chambre de lixiviation (5), dans la région du poste d'emplissage (2).

7. Percolateur selon l'une des revendications 1 à 6,
**caractérisé par le fait qu'**au moins un piston de compression, pouvant être déplacé dans la chambre de lixiviation (5), est disposé dans la région du poste de percolation (3).

8. Percolateur selon la revendication 7,
**caractérisé par** la présence, dans la région du poste de percolation (3), de deux pistons de compression (18, 19) dont le premier est disposé au-dessus du trajet de mouvement de la chambre de lixiviation (5), et dont le second est implanté au-dessous dudit trajet de mouvement de ladite chambre de lixiviation (5), les deux pistons (18, 19) étant orientés coaxialement l'un à l'autre et pouvant être mus, dans le sens axial, au moyen d'un entraînement, sachant qu'ils sont situés à l'extérieur du plan de mouvement de la chambre de lixiviation (5), dans une position de non-utilisation, et sont enfoncés dans ladite chambre de lixiviation (5) dans une position d'utilisation.

9. Percolateur selon la revendication 8,
**caractérisé par le fait que** l'entraînement, assigné au mouvement des pistons, est constitué d'une broche filetée (20) orientée parallèlement à la course desdits pistons et pouvant être mise en rotation par l'intermédiaire d'un moteur électrique ; et **par le fait que** des écrous (21) à broche, bloqués extérieurement à demeure sur lesdits pistons, sont en prise avec la broche filetée (20), sachant que ladite broche filetée (20) comprend deux segments filetés à pas opposés, dont l'un est en prise avec l'écrou à broche du piston supérieur, et dont l'autre est en prise avec l'écrou à broche du piston inférieur, de telle sorte que lesdits pistons soient mobiles dans des directions opposées suite à une rotation de ladite broche.

10. Percolateur selon l'une des revendications 1 à 9,
**caractérisé par le fait qu'**un piston éjecteur (22), prévu dans la région du poste d'éjection (4), peut être déplacé dans la chambre de lixiviation (5).

11. Percolateur selon la revendication 10,
**caractérisé par le fait que** le piston éjecteur (22) peut être mû axialement par un entraînement, sachant qu'il est situé au-dessus du plan de mouvement de la chambre de lixiviation (5), dans une position de non-utilisation, et est enfoncé dans ladite chambre de lixiviation (5) dans une position d'utilisation.

12. Percolateur selon la revendication 10 ou 11,
**caractérisé par le fait que** le piston éjecteur (22) peut être mû par l'entremise d'une broche filetée (23) orientée parallèlement à la course dudit piston, et pouvant être mise en rotation par l'intermédiaire d'un moteur électrique d'entraînement ; et **par le fait qu'**un écrou (24) à broche, bloqué extérieurement à demeure sur ledit piston éjecteur (22), est en prise avec ladite broche filetée (23).

13. Percolateur selon l'une des revendications 8 à 12,
**caractérisé par le fait qu'**un moteur électrique commun d'entraînement, prévu pour la rotation des broches filetées (20, 23) des pistons de compression (18, 19) et du piston éjecteur (22), est en prise avec lesdites broches filetées par l'intermédiaire d'éléments de transmission revêtant, notamment, la forme de roues dentées.

14. Percolateur selon l'une des revendications 1 à 13,
**caractérisé par le fait qu'**un réceptacle (25), de préférence un tiroir, est disposé dans la région du poste d'éjection (4), au-dessous de la zone d'expulsion du marc.

15. Percolateur selon l'une des revendications 8 à 14,
**caractérisé par le fait que** les pièces de raccordement, dédiées à l'amenée d'eau chaude et à l'évacuation du filtrat, sont implantées sur les pistons de compression (18, 19).

16. Percolateur selon l'une des revendications 1 à 15,
**caractérisé par le fait qu'**une platine d'appui (26) fixée à la chambre de lixiviation (5), notamment à proximité de la région extrême supérieure de cette dernière, dégage l'embouchure de ladite chambre de lixiviation (5) et recouvre l'embouchure du poste d'emplissage (2) lorsque ladite chambre de lixiviation (5) est positionnée dans la région du poste de percolation (3), et/ou dans la région du poste d'éjection (4).

17. Percolateur selon l'une des revendications 1 à 16,
**caractérisé par le fait que** le tronçon tubulaire, matérialisant la chambre de lixiviation (5), offre un évasement tronconique dans ses zones d'embouchure (27), de sorte que la largeur intérieure est légèrement plus grande que le diamètre extérieur du piston éjecteur (22) et des pistons de compression (18, 19) y compris, le cas échéant, les garnitures d'étanchement ceinturant lesdits pistons ; tandis qu'il présente une forme cylindrique (28) dans sa région centrale et est intimement adapté au dimensionnement desdits pistons englobant, le cas échéant, lesdites garnitures d'étanchement.

18. Percolateur selon l'une des revendications 1 à 17,
**caractérisé par le fait que** la chambre de lixiviation (5) consiste en de l'acier fin.

19. Percolateur selon l'une des revendications 10 à 18,
**caractérisé par le fait que** le piston éjecteur (22) comporte une lèvre élastique périphérique consistant, notamment, en du silicone.
